Europäisches Patentamt

(19) European Patent Office

Office européen des brevets

(11) Publication number : **0 377 319 B1**

(12) **EUROPEAN PATENT SPECIFICATION**

(45) Date of publication of patent specification :
**10.03.93 Bulletin 93/10**

(51) Int. Cl.[5] : **C04B 35/58**

(21) Application number : **89313585.5**

(22) Date of filing : **27.12.89**

(54) method of manufacturing high density silicon nitride sintered bodies.

(30) Priority : **27.12.88 JP 327988/88**

(43) Date of publication of application :
**11.07.90 Bulletin 90/28**

(45) Publication of the grant of the patent :
**10.03.93 Bulletin 93/10**

(84) Designated Contracting States :
**DE FR GB**

(56) References cited :
**EP-A- 0 080 711**
**EP-A- 0 139 793**
**WORLD PATENT INDEX LATEST DATABASE,**
**accession no. 82-29293E, Derwent week 15,**
**1982, Derwent Publications Ltd, London, GB; &**
**JP-A-57 038 378 (SUMITOMO ELEC. IND. K.K.)**

(73) Proprietor : **NGK INSULATORS, LTD.**
**2-56, Suda-cho, Mizuho-ku**
**Nagoya City Aichi Pref. (JP)**

(72) Inventor : **Miwa, Shinichi**
**5 Terugaoka Meito-ku**
**Nagoya City Aichi Pref. (JP)**
Inventor : **Asami, Seiichi**
**1-110, Aza-Kamitokosafu Motojyuku-cho**
**Okazaki City Aichi Pref. (JP)**
Inventor : **Kajihara, Takehiro**
**675-45, Ohaza-Futaebori**
**Komaki City Aichi Pref. (JP)**

(74) Representative : **Paget, Hugh Charles Edward**
**et al**
**MEWBURN ELLIS 2 Cursitor Street**
**London EC4A 1BQ (GB)**

EP 0 377 319 B1

Jouve, 18, rue Saint-Denis, 75001 PARIS

## Description

The present invention relates to a method of manufacturing high density silicon nitride sintered bodies having excellent mechanical strength at high temperatures, and to such silicon nitride bodies

There are known various methods for manufacturing high density silicon nitride sintered bodies having excellent mechanical strength. As one example, there is disclosed, in JP-B-61-25677, a method of manufacturing high density silicon nitride sintered bodies wherein a powder consisting essentially of powdery raw materials of silicon nitride and Y, Mg, Zr as a sintering aid is shaped to obtain a formed body, and the formed body is fired. See also EP-A-139 793.

According to the known method mentioned above, it is possible to obtain the high density silicon nitride sintered bodies, but it is not possible to achieve a complete crystallization of an intergranular glass phase which affects the mechanical strength at high temperatures. Therefore, there is a drawback that it is not possible to obtain certainly silicon nitride sintered bodies having excellent mechanical strength even at high temperatures.

In order to eliminate the drawback mentioned above, if a reheating treatment technique for crystallizing the intergranular glass phase disclosed in for example, JP-B-58-50944, is applied to the above silicon nitride sintered bodies, it is possible to obtain the silicon nitride sintered bodies having excellent mechanical strength even at high temperatures. However, in this case, since the reheating treatment must be performed after firing the formed body, there is a drawback that the manufacturing cost of the silicon nitride sintered bodies is increased.

EP-A-80711 describes a process in which part of the silicon nitride powder and, among other components, SiC are heat-treated prior to molding. This involves the additional step of pre-treatment.

It is an object of the present invention to eliminate the drawbacks mentioned above and to provide a method of manufacturing silicon nitride sintered bodies which can perform a certain crystallization of an intergranular glass phase without performing a reheating treatment or a temperature-descending control in a furnace.

The invention is set out in claim 1 and claim 3.

In the above-mentioned construction, into a composition system, of which the intergranular glass phase is easy to crystallize and in which a predetermined amount of rare earth element preferably Y or Y and at least one other rare earth element substituting a part of Y, Mg and Zr are mixed with silicon nitride, a predetermined amount of SiC is further mixed as an additive. Therefore, a crystallization speed of the intergranular glass phase increases extremely and thus it is possible to achieve a complete crystallization of the intergranular glass phase.

As a result, it is possible to obtain silicon nitride sintered bodies having a high mechanical strength at high temperatures, without performing a reheating treatment or a temperature-descending control in a furnace. In the invention, it has appeared that there is specifically precipitated a J phase solid solution having a high mechanical strength at high temperatures and an excellent fatigue resistance at high temperatures as an intergranular crystalline phase.

The amount of SiC is limited to 0.3~5 parts by weight with respect to the powder raw material of silicon nitride present in an amount of 100 parts by weight. The reasons for limiting the amount of SiC are as follows. If the amount of SiC is less than 0.3 parts by weight, a part or all of the fired bodies remain in a non-crystallized state in case of a furnace cooling having a large temperature-descending speed. In contrast, if the amount of SiC is in excess of 5 parts by weight, mechanical strength at room temperature decreases extremely.

With respect to powder raw materials of silicon nitride present in an amount of 100 parts by weight, amounts of rare earth element, Mg compound and Zr compound are limited to 15~2 parts by weight, 15~0.5 parts by weight and 13~0.3 parts by weight respectively, which are calculated as amounts of oxides. This is because, if one of the amounts of rare earth element, Mg compound and Zr compound is contains more than or less than that of the above limited values, a crystallization due to SiC addition is not promoted effectively.

The reason for using a rare earth element as one of the additives for the silicon nitride sintered body is to form a compound having a high melting point between $Si_3N_4$ in the raw materials and $SiO_2$ in impurities of the raw materials. The thus generated compound having a high melting point has better mechanical properties such as a mechanical strength and a creep resistance at high temperatures than those of the other oxide compounds. Therefore, it is possible to obtain silicon nitride sintered bodies having an excellent mechanical strength at high temperatures by using specific chemical compositions according to the invention.

As for firing processes for silicon nitride formed bodies each having the chemical composition according to the invention, it is preferred to perform firing under a nitrogen or inert gas atmosphere at a temperature of 1550~1800°C and to effect the furnace cooling after the firing as a temperature-descending operation.

Thereby, it is possible to obtain silicon nitride sintered bodies, without effecting the reheating treatment etc., which have an excellent bending strength more than 600 MPa at an aimed high temperature such as 1200°C, an excellent breakdown point more than 600 MPa after heated at 900°C for 1000 hours and an ex-

2

cellent relative density of fired bodies more than 95%.

The invention will now be illustrated in detail by examples, with reference to the accompanying drawing, wherein:

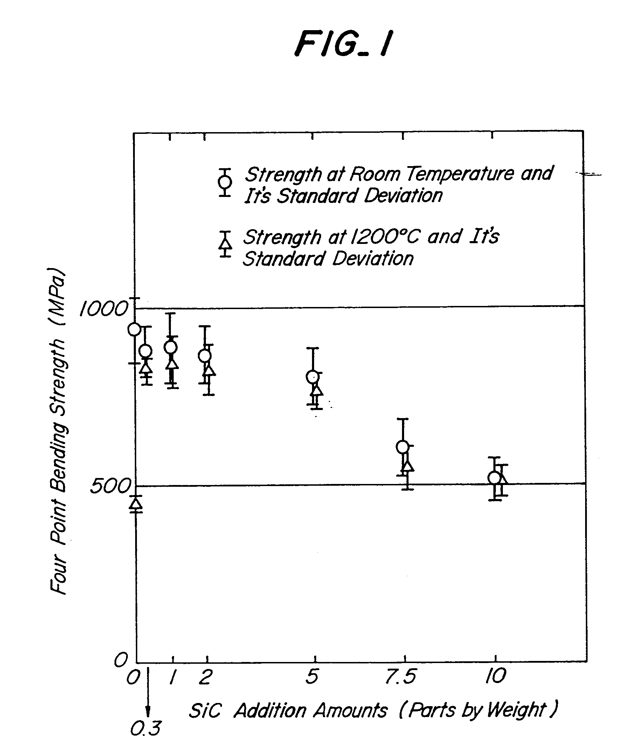

Fig. 1 is a graph showing a relation between an amount of added SiC and four point bending strength.

## Example 1

With 100 parts by weight of a powder raw material of silicon nitride having a purity of 97.2% by weight, an average grain diameter of 0.7 $\mu$m and a BET specific surface area of 11 m$^2$/g, there were mixed and formulated 6 parts by weight of $Y_2O_3$ powder raw material, 4 parts by weight of MgO powder raw material and 0.6 part by weight of $ZrO_2$ powder raw material, each having a purity of 99% by weight, an average grain diameter of 1.2~0.5 $\mu$m and a BET specific surface area of 20~12 m$^2$/g. Then, 0, 0.3, 1.0, 2.0, 5.0, 7.5, 10 part respectively by weight of SiC powder having a purity of 99% by weight, an average grain diameter of 0.2~0.5 $\mu$m and a BET specific surface area of 20 m$^2$/g were added to the thus obtained formulation raw material to obtain seven different raw materials. Then, by using iron media coated with nylon resin and having an outer diameter of 7 mm and a nylon resin vessel having an inner volume of about 1.5 liters, 500 g of the media and 500 m$\ell$ of organic solvent were added to 200 g of each raw material so produced, which was granulated by a vibration mill at a vibration rate of 1200 times/min for 12 hours.

After the granulating step mentioned above, the organic solvent was vaporized to obtain dry powders, and all the dry powders were further granulated and passed through a sieve of 149 $\mu$m. The average grain diameters of the granulated dry powders were 70~100 $\mu$m. Then, the granulated dry powders were pressed using a metal mold, and an isostatic pressing was performed under a pressure of 550 MPa (5.6 t/cm$^2$) to obtain formed bodies of 60 x 60 x 10 mm. After that, the thus obtained formed bodies were fired at an atmospheric pressure under a nitrogen atmosphere, and then cooled down in the furnace. In this case, temperature-descending speeds measured by a thermocouple were more than 1400°C/hr at 1400°C, more than 700°C/hr at 1200°C and more than 600°C/hr at 1000°C.

After that, with respect to the sintered bodies, four point bending strengths at room temperature and 1200°C were measured by 5 times respectively on the basis of a measuring method for the four point bending strength defined by JIS R 1601. The results of this measuring are shown in Fig. 1. From the results of Fig. 1, it is confirmed that when an amount of the added SiC is in excess of 5 parts by weight, the bending strengths both at room temperature and at high temperature were extremely decreased. Moreover, with respect to the sintered bodies, an X-ray diffraction test was performed to detect intergranular crystal phases of respective fired bodies. From the results of the X-ray diffraction test, it is confirmed that precipitation of the J phase solid solution is detected in the sintered bodies to which SiC is added, but is not detected in the sintered bodies to which no SiC is added.

Then identically formulated formed bodies were fired at the same firing condition using a large size furnace as compared with that of the firing step mentioned above. In this case, the temperature-descending speed in the furnace was about 1/2 compared to that of the previous furnace, but the results the same tendency on the mechanical strengths of the fired bodies and the same intergranular crystal phase.

It should be noted that the J phase solid solution is used to mean a crystal phase having a caspidine structure of a monoclinic system represented by $M^I_3$ ($M^{II}_2M^{III}_7$) $M^IM^{IV}_2$ such as $Ca_3(Si_2O_7)CaF_2$. In the silicon nitride sintered body according to the present invention in which the intergranular phase is crystallized, the crystallographic position of $M^I$ is occupied by Ca, a rare earth element such as Y and metal elements such as Mg, Fe, Ni or the like, the crystallographic position of $M^{II}$ is occupied by Si, A$\ell$ or the like and the crystallographic position of $M^{III}$ is occupied by O, N or the like while the crystallographic position of $M^{IV}$ is occupied by F, O, N or the like.

These crystalline phases can be identified by a powder X-ray diffraction method, and have the same type diffraction curve as that of $Si_3N_4 \cdot 4Y_2O_3 \cdot SiO_2$ shown in JCPDS card No. 32-1451.

## Example 2

Fired bodies of sample Nos. 1~19 according to the invention in which SiC was added and fired bodies of sample Nos. 21~33 according to the comparative embodiments in which SiC was not added, both having the formulated compositions shown in Table 1 were prepared in the same manner as that of the Example 1. Firing operation was performed at a temperature shown in Table 1 for 0.5 hour. Moreover, in the fired bodies of sample Nos. 32, 33, the temperature-descending speed after firing was controlled at 100°C/hr between 1400°C and 1000°C, and in the fired bodies of sample Nos. 20~31, a reheating treatment after firing was performed at a temperature of 1150~1250°C.

With respect to the fired bodies of respective samples, four point bending strengths at room temperature and a high temperature (1200°C) were measured, and the intergranular crystalline phases were detected, as is the same as the Example 1. Further, a relative density of respective fired bodies was also measured, and a breakdown point after heating at a temperature of 900°C for 1000 hours was also measured. The results are shown in Table 1.

## Table 1(a)

| Sample No. | | Formulated composition (parts by weight) | | | | | Crystalline phase at grain boundaries | Firing temperature (°C) | Four point bending strength of fired body (MPa) | | Relative density (%) | Breakdown point (MPa) |
|---|---|---|---|---|---|---|---|---|---|---|---|---|
| | | $Si_3N_4$ | SiC | $Y_2O_3$ conversion | MgO conversion | $ZrO_2$ conversion | | | RT | 1200°C | | |
| Present invention | 1 | 100 | 0.3 | 4.0 | 0.5 | 0.5 | J | 1800 | 800 | 720 | 96 | 690 |
| | 2 | 100 | 0.3 | 2.0 | 1.0 | 7.0 | J | 1750 | 830 | 640 | 96 | 650 |
| | 3 | 100 | 0.3 | 2.0 | 5.0 | 8.0 | J | 1700 | 920 | 620 | 97 | 600 |
| | 4 | 100 | 0.3 | 12.0 | 1.0 | 13.0 | J | 1700 | 870 | 800 | 97 | 740 |
| | 5 | 100 | 0.3 | 15.0 | 2.0 | 13.0 | J | 1650 | 860 | 810 | 95 | 710 |
| | 6 | 100 | 0.3 | 4.0 | 2.0 | 4.0 | J | 1750 | 940 | 850 | 98 | 730 |
| | 7 | 100 | 0.3 | 6.0 | 4.0 | 3.0 | J | 1700 | 980 | 800 | 97 | 730 |
| | 8 | 100 | 0.3 | 9.0 | 1.0 | 5.0 | J | 1700 | 810 | 730 | 96 | 660 |
| | 9 | 100 | 0.3 | 6.0 | 4.0 | 5.0 | J | 1700 | 840 | 720 | 96 | 650 |
| | 10 | 100 | 0.3 | 7.0 | 7.0 | 2.0 | J | 1700 | 780 | 710 | 97 | 650 |
| | 11 | 100 | 0.3 | 5.0 | 4.0 | 2.0 | J | 1750 | 870 | 700 | 96 | 670 |
| | 12 | 100 | 0.3 | 2.0 | 15.0 | 13.0 | J | 1700 | 770 | 650 | 95 | 600 |
| | 13 | 100 | 0.3 | 6.0 | 4.0 | 0.3 | J | 1650 | 880 | 830 | 98 | 750 |
| | 14 | 100 | 0.3 | 6.0 | 4.0 | 0.3 | J | 1550 | 720 | 680 | 95 | 620 |
| | 15 | 100 | 1.0 | 6.0 | 4.0 | 0.3 | J | 1650 | 930 | 890 | 98 | 770 |
| | 16 | 100 | 2.0 | 6.0 | 4.0 | 1.0 | J | 1700 | 950 | 870 | 97 | 760 |
| | 17 | 100 | 5.0 | 8.0 | 5.0 | 1.0 | J | 1700 | 900 | 820 | 96 | 750 |
| | 18 | 100 | 0.3 | 6.0 $Yb_2O_3$ 2 | 5.0 | 0.8 | J | 1720 | 810 | 740 | 96 | 700 |
| | 19 | 100 | 0.3 | 4.0 $Er_2O_3$ 2 | 4.0 | 0.6 | J | 1720 | 830 | 710 | 96 | 680 |

EP 0 377 319 B1

## Table 1(b)

| Sample No. | Formulated composition (parts by weight) | | | | | Crystalline phase at grain boundaries | Firing temperature (°C) | Four point bending strength of fired body (MPa) | | Relative density (%) | Break-down point (MPa) |
|---|---|---|---|---|---|---|---|---|---|---|---|
| | Si3N4 | SiC | Y2O3 conversion | MgO conversion | ZrO2 conversion | | | RT | 1200°C | | |
| 21 | 100 | 0 | 4.0 | 0.5 | 0.5 | - | 1800 | 880 | 490 | 97 | 380 |
| 22 | 100 | 0 | 2.0 | 5.0 | 8.0 | - | 1700 | 990 | 500 | 97 | 400 |
| 23 | 100 | 0 | 6.0 | 4.0 | 0.3 | - | 1650 | 1000 | 450 | 98 | 360 |
| 24 | 100 | 0 | 2.0 | 15.0 | 13.0 | - | 1700 | 750 | 360 | 96 | 320 |
| 25 | 100 | 0 | 9.0 | 1.0 | 5.0 | - | 1700 | 850 | 580 | 96 | 370 |
| 26 | 100 | 0 | 7.0 | 7.0 | 2.0 | - | 1700 | 840 | 480 | 97 | 350 |
| 27 | 100 | 0 | 15.0 | 2.0 | 13.0 | - | 1650 | 850 | 510 | 96 | 320 |
| Comparative example 28*1 | 100 | 0 | 6.0 | 4.0 | 0.3 | K+J | 1650 | 860 | 770 | 95 | 520 |
| 29*1 | 100 | 0 | 8.0 | 5.0 | 1.0 | H+K+J | 1700 | 820 | 740 | 94 | 510 |
| 30*1 | 100 | 0 | 6.0 | 4.0 | 0.3 | K+J | 1650 | 850 | 710 | 96 | 500 |
| 31*1 | 100 | 0 | 6.0 | 4.0 | 0.3 | K+J | 1650 | 830 | 680 | 95 | 480 |
| 32*2 | 100 | 0 | 6.0 | 4.0 | 0.3 | H+K+J | 1650 | 820 | 690 | 96 | 500 |
| 33*2 | 100 | 0 | 8.0 | 5.0 | 1.0 | H+K+J | 1700 | 810 | 700 | 95 | 450 |

(Note)  *1) Reheating process     No. 28: 1150°C × 3 hrs,     No. 29: 1200°C × 3 hrs
                                   No. 30: 1200°C × 3 hrs,     No. 31: 1250°C × 3 hrs

        *2) Performing temperature-descending control

From the results shown in Table 1, the sintered bodies of the sample Nos 1~19 according to the present

6

invention in which the intergranular phase is only J phase solid solution have the higher bending strengths both at room temperature and high temperature, the same or a little higher relative density and the higher breakdown point after heating at 900°C for 1000 hours as those of the fired bodies of the sample Nos. 21~33 according to the comparative examples.

In Table 1, K is a crystalline phase of wollastonite structure having the same type diffraction curve as that of $YSiO_2N$ shown in JCPDS card No. 31-1462. Moreover, H is a crystalline phase of an apatite phase.

Moreover, the apatite phase is a crystalline phase of an apatite structure having the same type diffraction curve as a crystalline phase of hexagonal system such as $Y_{10}(SiO_4)_6N_2$ typically expressed by JCPDS card No. 30-1462. In the fired bodies in which more than two kinds of rare earth elements are added, the crystallographic position of Y ion in $Y_{10}(SiO_4)_6N_2$ crystalline is occupied by the rare earth element ions, and they are completely solidified. Further, when the crystallographic position of N is occupied by 0, the crystalline maintains in an electrically neutral condition, and thus the crystallographic position Y becomes vacant.

As can be seen from the above explanation, in the silicon nitride sintered body and the manufacturing method thereof according to the present invention, since the silicon nitride formed body, in which a predetermined amounts of rare earth element, Mg and Zr and further a predetermined amount of SiC are added to raw materials of silicon nitride, is fired, it is possible to obtain high density silicon nitride sintered bodies having an excellent mechanical strength at high temperatures, without effecting the reheating treatment.

## Claims

1. A method of manufacturing a silicon nitride sintered body comprising the steps of:-
   preparing a powder consisting of powder raw materials of 100 parts by weight of silicon nitride, 2 to 15 parts by weight of a rare earth element calculated as oxide, 0.5 to 15 parts by weight of Mg compound calculated as oxide, 0.3 to 13 parts by weight of Zr compound calculated as oxide, 0.3 to 5 parts by weight of SiC and optionally a forming aid;
   molding the thus prepared powder; and
   firing the resulting molding.

2. A method according to claim 1, wherein said rare earth element is Y or Y and at least one other rare earth element.

3. A silicon nitride sintered body containing silicon nitride and, per 100 parts by weight of silicon nitride, 2 to 15 parts by weight of a rare earth element or elements, 0.5 to 15 parts by weight of Mg, 0.3 to 13 parts by weight of Zr all calculated as oxide, 0.3 to 5 parts by weight of SiC and optionally a forming aid.

## Patentansprüche

1. Verfahren zur Herstellung eines gesinterten Siliziumnitridkörpers, das folgende Schritte umfaßt:
   das Herstellen eines Pulvers, das aus Pulverrohmaterialien aus 100 Gew.-Teilen Siliziumnitrid, 2 bis 15 Gew.-Teilen eines Seltenerdelements, berechnet als Oxid, 0,5 bis 15 Gew.-Teilen Mg-Verbindung, berechnet als Oxid, 0,3 bis 13 Gew.Teilen Zr-Verbindung, berechnet als Oxid, 0,3 bis 5 Gew.-Teilen SiC und wahlweise einer Formungshilfe besteht;
   das Einformen des so hergestellten Pulvers; und
   das Brennen des resultierenden Formkörpers.

2. Verfahren nach Anspruch 1, worin das genannte Seltenerdelement Y oder Yb und zumindest ein anderes Seltenerdelement ist.

3. Gesinterter Siliziumnitridkörper, der Siliziumnitrid und, pro 100 Gew.-Teile Siliziumnitrid, 2 bis 15 Gew.-Teile eines oder mehrerer Seltenerdelements oder -elemente, 0,5 bis 15 Gew.-Teile Mg, 0,3 bis 13 Gew.-Teile Zr, alle als Oxid berechnet, 0,3 bis 5 Gew.-Teile SiC und wahlweise eine Formhilfe enthält.

## Revendications

1. Méthode de fabrication d'un corps fritté en nitrure de silicium comprenant les étapes de :

préparer une poudre consistant en matières premières pulvérulentes de 100 parties en poids de nitrure de silicium, 2 à 15 parties en poids d'un élément de terres rares calculé comme oxyde, 0,5 à 15 parties en poids d'un composé de Mg calculé comme oxyde, 0,3 à 13 parties en poids d'un composé de Zn calculé comme oxyde, 0,3 à 5 parties en poids de SiC et, facultativement, un auxiliaire de mise en forme ;

mouler la poudre ainsi préparée , et

cuire le moulage résultant.

2. Méthode selon la revendication 1, où ledit élément de terres rares est Y ou Y et au moins un autre élément de terres rares.

3. Corps fritté en nitrure de silicium contenant du nitrure de silicium et, pour 100 parties en poids de nitrure de silicium, 2 à 15 parties en poids d'un élément de terres rares ou plusieurs éléments, 0,5 à 15 parties en poids de Mg, 0,3 à 13 parties en poids de Zr, le tout étant calculé sous forme d'oxyde, 0,3 à 5 parties en poids de SiC et, facultativement, un auxiliaire de mise en forme.

# FIG. 1